# EUROPEAN PATENT APPLICATION

(11) **EP 4 712 027 A1**
(43) Date of publication of application: **18.03.2026**
(21) Application number: 25200294.4
(22) Date of filing: 04.09.2025
(51) Int. Cl.: G06T 7/80

(54) **ELECTRONIC DEVICE, SYSTEM, AND RELATED METHODS FOR DETECTING RECALIBRATION NEEDS**

(30) Priority: 12.09.2024 SE 2450901
(71) Applicant: Sony Group Corporation, Tokyo 108-0075 (JP)
(72) Inventor: HUANG, Sangxia, Basingstoke, RG22 4SB (GB)
(74) Representative: Aera A/S

(57) **Abstract**

An electronic device is disclosed. The electronic device comprises memory circuitry, an interface and processor circuitry. The electronic device is configured to obtain image data from a plurality of image sensors, wherein the image data comprises a plurality of two-dimensional coordinates associated with a set of respective objects. Optionally, at least two image sensors of the plurality of image sensors have an overlapping area of their fields of view. The electronic device is configured to generate, based on the image data, three-dimensional coordinates associated with the set of respective objects. The electronic device is configured to determine, based on the three-dimensional coordinates, a recalibration parameter. Optionally, the recalibration parameter is indicative of a need for recalibration of at least one of the plurality of image sensors. The electronic device is configured to control, based on the recalibration parameter, provision of an alert message.

## Description

The present disclosure pertains to the field of Internet of Things (IoT), facility management and security, and electronic devices for detecting recalibration needs of cameras. The present disclosure relates to a method for detecting a recalibration need for an image sensor and a related device.

### BACKGROUND

Camera-based positioning systems are seeing a continual adoption across a widespread variety of industries including health and wellness, logistics, agriculture and location-based entertainment. With installations of multi-camera positioning systems often having many cameras and in a diverse array of environments, understanding errors in the system can be costly, in both financial and time resources. Moreover, errors in camera-based positioning systems may result in critical losses, for example in a security system.

### SUMMARY

Accordingly, there is a need for devices and methods, which may mitigate, alleviate or address the shortcomings existing and may provide accurate detection of recalibration needs of image sensors, such as cameras, such as in a remote setting.

An electronic device is disclosed. The electronic device comprises memory circuitry, an interface and processor circuitry. The electronic device is configured to obtain image data from a plurality of image sensors. The image data comprises a plurality of two-dimensional coordinates associated with a set of respective objects. Optionally, at least two image sensors of the plurality of image sensors have an overlapping area of their fields of view. The electronic device is configured to generate, based on the image data, three-dimensional coordinates associated with the set of respective objects. The electronic device is configured to determine, based on the three-dimensional coordinates, a recalibration parameter. Optionally, the recalibration parameter is indicative of a need for recalibration of at least one of the plurality of image sensors. The electronic device is configured to control, based on the recalibration parameter, provision of an alert message.

A method is disclosed. In one or more examples, the method is for detecting a recalibration need for an image sensor. In one or more examples, the method comprises obtaining image data from a plurality of image sensors. In one or more examples, the image data comprises a plurality of two-dimensional coordinates associated with a set of respective objects. In one or more examples, the at least two image sensors of the plurality of image sensors have an overlapping area of their fields of view. In one or more examples, the method comprises generating, based on the image data, three-dimensional coordinates associated with the set of respective objects. In one or more examples, the method comprises determining, based on the three-dimensional coordinates, a recalibration parameter. For example, the recalibration parameter is indicative of a need for recalibration of at least one of the plurality of image sensors. In one or more examples, the method comprises controlling, based on the recalibration parameter, provision of an alert message.

It is an advantage of the present disclosure that the disclosed electronic device improves the detection of a need for recalibration of the image sensor(s), which may lead to an improved accuracy of the position and orientation data collection of sensor devices.

Advantageously, the electronic device may be able to identify a need for one or more sensors, such as sensor devices like cameras (either internal or external to the electronic device) to be recalibrated. In a system where there are many cameras, the ability to first detect and secondly identify which camera has been disrupted in some way, and thus requires recalibration, may result in significant cost savings and greatly reduce troubleshooting time. In addition, and as mentioned above, this process can be conducted remotely, which can also provide for increased versatility of the electronic device to be installed, implemented, used and maintained in a variety of settings and configurations.

This may advantageously allow for improved reliability and robustness to an image sensor system such as a camera-based positioning system. Further, the disclosed electronic device provides for the obtaining of sensor device data (such as position and orientation data) in a consistent and remote manner. For example, the electronic device may, based on received image data, determine various position and orientation data about one or more of the image sensors without requiring a physical interaction with any of the image sensors (for example, checking the lenses for dirt or other debris).

An additional advantage may be seen as the electronic device, such as the camera, may seamlessly adapt, including adapting a number of recalibration parameters or other site-specific settings, to any environment (such as without the user's need to modify settings).

An additional advantage may be an increased storage capacity, as various space-saving measures are described herein, namely quantizing data in advance of storage, in order to reduce the need to store collected raw image data.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 is a diagram illustrating an example monitoring system comprising an example electronic device and a set of examples image sensors, according to this disclosure,
Fig. 2A shows an example monitoring system comprising one or more example image sensors,
Fig. 2B shows an example 2D points as depicted in a camera view,
Fig. 2C shows an example 2D points as depicted in a camera view,
Fig. 2D shows an example 2D points as depicted in a camera view,
Fig. 3 shows a block diagram of an example electronic device according to the disclosure, and
Fig. 4 shows a flow diagram of an example method 100, performed by an electronic device according to the disclosure, for detecting a recalibration need for an image sensor.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

In many spaces, camera-based positioning systems are seeing wide adoption. For example, areas such as health & wellness, logistics, agriculture and location-based entertainment are being impacted by image sensor systems (such as camera-based positioning systems). In one configuration of such systems, multiple image sensors (such as cameras) are installed at fixed locations (for example, in a single room) and detection information from different views (such as from each of the different cameras) are aggregated to form a robust and accurate 3D understanding of the area under observation, for examples, a 3D visualization of the room or other space.

In many camera-based positioning systems, accurate information about the position and orientation of the cameras may be needed in order to successfully and accurately aggregate the individual camera views (including sensor data such as one or more two-dimensional coordinates for each camera view). Another relevant factor in the use of camera-based positioning systems is the clarity and cleanliness of the camera lenses of each of the cameras in the system.

However, when deploying such systems, over time, the image sensors (such as cameras) may be subjected to any number of disturbances. As used herein, the words "camera" and "image sensor" may be used interchangeably, as a camera is considered an example or a subset of an image sensor. These disturbances may make it difficult for the system to provide accurate and reliable operation over time.

Some of the disturbances to the cameras may include vibrational or mechanical shifts, such physical shifts to the camera itself. For example, an image sensor may be installed in a room which may have an heating ventilation and cooling (HVAC) system which may provide sustained vibration resulting in a disturbance to the image sensor. In one or more examples, an image sensor may be installed outdoors, where it is subject to weather of various types that could impact its positioning over time. In one or more examples, the image sensor may be installed in a location nearby a construction site or in a place where it may be disturbed due to human, non-human animal, or other objects interfering with it (such as accidentally bumping into it).

Another disturbance may be from other environmental factors such as changes in temperature and/or humidity that can expand or contract mounting fixtures and housings. In examples, these changes to the image sensor and/or its housing or installation hardware may impact the camera angles and positions.

Another category of disturbances may be contamination on the camera lens. For example, the camera lens may be impacted by dust, water spots, insects or other dirt or interferences on the camera lens. This lens contamination can degrade the quality of the image data (for example, image quality), impacting the system's ability to capture clear visual data.

In one or more examples, a primary focus is on establishing accurate extrinsic parameters during the initial installation. In one or more examples, extrinsic parameters may be seen as the position and orientation of one or more of the cameras. However, the solution(s) may or may not address how to monitor and correct the gradual or sudden misalignments (due to, for example, one or more of the disturbances listed herein, or another type of disturbance) that may occur after the installation of the image sensor has been completed.

In one or more example solutions, the system may rely on environment-specific visual features to perform visual monitoring (for example, identifying one or more stable features in the visual environment and using them as reference points to identify changes in a visual monitoring system). In the example of a visual monitoring system installed in a stadium setting, the system may use detectable features such as a central screen, doorways, particular seats or other consistent physical features in the stadium. Thus, the system may require prior knowledge about the environment itself to effectively configure the installation. However, over time, due to examples such as new construction, changes in the layout, new lighting conditions or other factors, the visual characteristics may be less apparent and/or less effective in serving as reference points for the system to monitor for changes to the camera position or orientation.

Therefore, there may be a need for a robust monitoring system that continuously assesses the cameras' position, orientation, and lens clarity to ensure long-term accuracy and reliability of the positioning system.

The present disclosure addresses such needs by the disclosed techniques.

In one or more examples, an electronic device may be contemplated wherein, when calibration information such as information regarding the calibration of the image sensor at installation in its "correct" position and orientation and the image sensor is running normally, two pieces of information may be assumed. First, a reprojection error of reconstructed three-dimensional (3D) points in each image sensor field of view (such as in each camera view) should be low at installation and in satisfactory operation. A second assumption is that at installation and in satisfactory operation, a likelihood of detection of an object (such as a person or other mobile or immobile object) in a particular camera view is relatively stable and depends in a large part on the location of the person relative to the camera's field of view. For example, in a electronic device comprising two image sensors where the field of view is pointed for each toward the center of a room, it is expected that a person standing in the center of the room is detected by each of image sensor 1 and image sensor 2. In addition, the image data from each of image sensor 1 and image sensor 2 for the individual person is associated most of the time, in that, for example, a movement of the arm may be detected by each of image sensor 1 and image sensor 2 in the same time frame.

However, in one or more examples, when the image sensor has been disturbed, one or more of the described information may be impacted. For example, the reprojection error values may become larger for the disturbed image sensor. In one or more examples, the two-dimensional (2D) detections from the image sensor may become associated with the 3D objects less often than expected (for example, the discrepancy between the 2D data and the 3D representation may increase). In one or more examples, the electronic device, as disclosed, may collect runtime statistics related to the properties listed, monitor the evolution of the same statistics over time (for example, a recalibration parameter), and raise an alert (such as an alert message), when a recalibration parameter reaches a particular threshold. In the example provided, prior knowledge of the visual features in the environment (such as the stadium example described herein) is not needed.

The figures are schematic and simplified for clarity, and they merely show details which aid understanding the disclosure, while other details have been left out. Throughout, the same reference numerals are used for identical or corresponding parts.

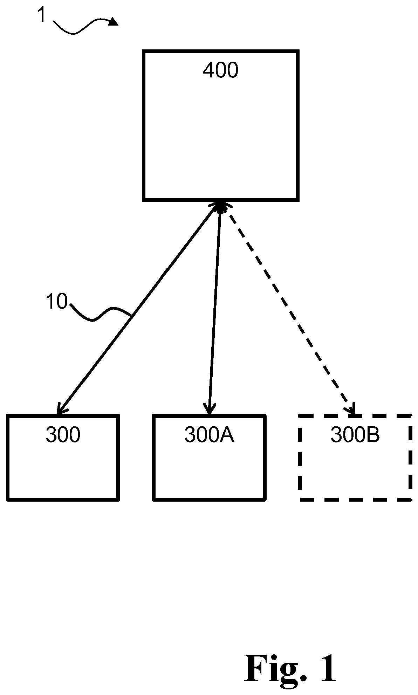

Fig. 1 is a diagram illustrating an example monitoring system 1 comprising an example electronic device 400 and a set of examples image sensors 300A, 300B, and 300C, according to this disclosure.

The electronic device 400 comprises memory circuitry, an interface and processor circuitry. The electronic device is configured to obtain (such as receive, generate, detect, and/or capture) image data from a plurality of image sensors, such as image sensors 300A, 300B, and 300C (collectively, image sensors 300). The image sensors 300 may be configured to communicate with the electronic device 400 via a wired and/or wireless link 10.

In one or more examples, the electronic device 400 may include the image sensors 300, so that image sensors 300 may be seen as internal image sensors. In other words, image sensor 300 may be a component of electronic device 400. In one or more examples, the electronic device 400 may be seen as a sensor device configured to carry out the operations disclosed here.

In one or more examples, the electronic device 400 may be communicatively coupled with the image sensor 300 as external image sensors. In one or more examples, the electronic device 400 may be operatively coupled with internal image sensors and/or external image sensors (not pictured).

The system 1 of Fig. 1 can be for example a system for monitoring a facility, such as an office, a warehouse, a farm, etc.

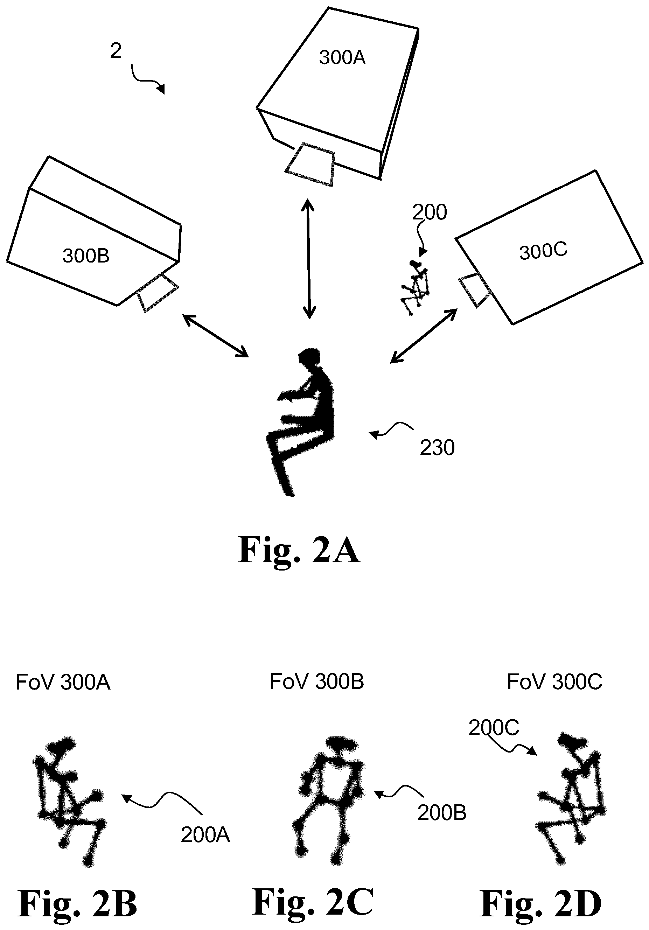

Fig. 2A shows an example monitoring system 2 comprising one or more example image sensors 300A, 300B, 300C (collectively, 300). In one or more example, each of the image sensors 300 has a shared (in at least part) field of view. Each of the image sensors have their own perspective of the object in view, as depicted at Fig. 2B-Fig.2D. Fig. 2A also shows the reconstructed 3D object 230 (such as a seated person). In one or more examples, the electronic device disclosed herein may obtain the image data from two or more of image sensors 300. In one or more examples, the electronic device may then calculate the 3D point associated with the same object as in the 2D detected points. The electronic device may then reproject the 3D point (for example, the left foot point on the 2D coordinates and the 3D coordinates for the same left foot point). The electronic device may then compare the distance between the detected 2D coordinate and the reprojected 3D coordinate. In other words, the reprojection error may be the distance or difference between the "reprojection of the left foot point" and the "left foot point detected from the image".

Fig. 2B shows an example 2D keypoints as depicted in a field of view (FoV) of image sensor 300A. Fig. 2B depicts an example 2D key points (such as example 2D coordinates discussed herein) 200A detected in field of view of image sensor 300A.

Fig. 2C shows an example 2D points as depicted in a FoV of image sensor 300B. Fig 2C depicts an example 2D key points (such as example 2D coordinates discussed herein) 200B detected in the FoV of image sensor 300B.

Fig. 2D shows an example 2D points as depicted in FoV of image sensor 300C. Fig 2D depicts an example 2D key points (such as example 2D coordinates discussed herein) 200C, detected in FoV of image sensor 300C.

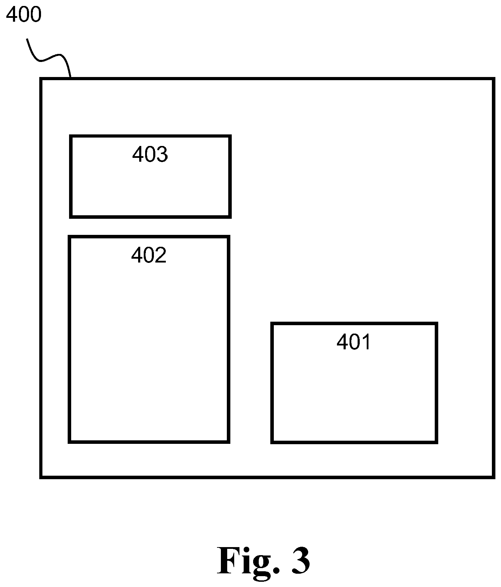

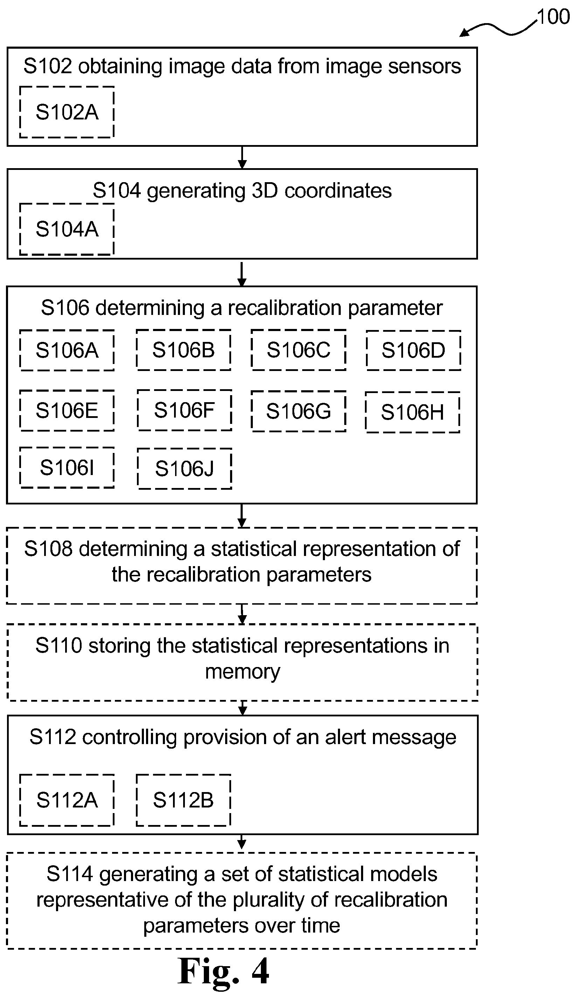

Fig. 3 shows a block diagram of an example electronic device 400 according to the disclosure. The electronic device 400 comprises memory circuitry 401, processor circuitry 402, and a interface 403. The electronic device 400 may be configured to perform any of the methods disclosed in Fig. 4. In other words, the electronic device 400 may be for detection of recalibration needs for an image sensor. The interface 403 is configured for wired and/or wireless communications and can be seen as a wireless interface.

The electronic device 400 is configured to obtain (such as via the processor circuitry 402 and/or the interface 403) image data from a plurality of image sensors, wherein the image data comprises a plurality of two-dimensional coordinates associated with a set of respective objects, wherein at least two image sensors of the plurality of image sensors having an overlapping area of their fields of view.

The electronic device 400 is configured to generate (such as via the processor circuitry 402), based on the image data, three-dimensional coordinates associated with the set of respective objects.

The electronic device 400 is configured to determine (such as via the processor circuitry 402), based on the three-dimensional coordinates, a recalibration parameter, wherein the recalibration parameter is indicative of a need for recalibration of at least one of the plurality of image sensors.

In one or more example electronic devices, the image data obtained by the image sensors (such as image sensor 300 of Fig. 1) comprises a plurality of two-dimensional coordinates associated with a set of respective objects. In one or more examples, at least two image sensors of the plurality of image sensors have an overlapping area of their fields of view. For example, each of sensor (such as each of image sensors 300A and 300B of Fig. 1) may have at least a partial overlap of the fields of view, in which one or more of the objects is also within the overlapping field of view. The electronic device is configured to generate, based on the image data, three-dimensional coordinates (such as (x,y,z)) associated with the set of respective objects. In one or more examples, the electronic device may obtain image data (such as, for example, the 2D keypoint detections from each camera for the set of respective objects, along with other basic camera information such as camera extrinsics, etc.). In one or more examples, the electronic device may generate, based on the image data, a set of 3D keypoints for the objects. The electronic device may also generate an association (as described herein) between the 2D objects and each 3D reconstructed object. The electronic device is configured to determine, based on the three-dimensional coordinates, a recalibration parameter. In one or more examples, the electronic device may generate a set of 3D keypoints for each object; the generation may further comprise an association between the 3D object(s) and the 2D objects and/or 2D keypoints on which the 3D objects were constructed. Optionally, the recalibration parameter is indicative of a need for recalibration of at least one of the plurality of image sensors. The electronic device is configured to control, based on the recalibration parameter, provision of an alert message. In one or more examples, providing an alert based on the recalibration parameter may be seen as providing an alert depending on the recalibration parameter. For example, when the recalibration parameter shows no need for recalibration, the alert may not be provided.

In one or more example electronic devices, image data may be seen as data associated with an image, such as data captured by an image sensor such as a camera. In one or more examples, the image data may comprise a set of 2D datapoints, such as 2D keypoints, indicative of various features identified within the image, such as pixels or the like. In one or more examples, 2D keypoints or key datapoints may be indicative of various features identified within the image, such as a in a human, a body joint a kneecap, an elbow, a chin, and/or in an animal a foot, a tail, and/or in furniture, a leg, a midpoint of a seatback, an edge of a table, or the like. In one or more examples, keypoints may be detected by a keypoint detector/computer vision algorithm such as scale-invariant feature transform (SIFT).

In one or more example electronic devices, image sensors may be seen as one or more devices equipped with sensors that are able to collect visual (such as image) data. In one or more examples, the image data collected may also include 3D keypoint coordinates and/or other image data as described herein. In one or more examples, the image sensors may a component of one or more sensor devices. In one or more examples, the sensor device may comprise additional sensors, including one or more of: visual sensor(s), motion sensor(s), proximity sensor(s), audio sensor(s), pressure sensor(s), and other suitable sensor(s). As discussed herein, the image sensor(s) may be components of the electronic device.

In one or more example electronic devices, the set of respective objects may be seen as one or more objects. In one or more examples, an object may be seen as a whole or part of an object such as a physical object (for example, a person, a person's elbow, desk, a desk drawer, or another mobile or immobile object).

In one or more example electronic devices, a field of view may be seen as the part of the world that is visible through the camera at a particular position and orientation in space. In one or more examples, a field of view of one camera may overlap with a field of view of another camera, and, for example, each contain the same object, but from different perspectives.

In one or more example electronic devices, a recalibration parameter may be seen as a measurable indicator (such as numerical or Boolean) of a need for recalibration of at least one of the plurality of image sensors. In one or more examples, the recalibration parameter may be determined based on the 3D coordinates and the 2D coordinates. In one or more examples, the recalibration parameter may monitor the need for a recalibration wherein the need is caused by a deviation, an irregularity, a shift, a discrepancy, an inconsistency, and/or a difference in the detected image data. In one or more examples, the recalibration parameter may provide for various degrees of severity or levels of recalibration needed.

In one or more example electronic devices, the distance between the 3D coordinates and corresponding 2D coordinates for the same object is indicative of an error, for example, a sensor error or a reprojection error, or the like.

In one or more example electronic devices, the first criterion may be seen as a numerical limitation. In one or more examples, the first criterion may indicate a distance or other value, beyond which the electronic device determines the presence of an error. For examples, a first criterion may be X. If the distance (such as the distance between the 3D and corresponding 2D coordinates for the same object) exceeds a threshold (such as a predetermined threshold), the electronic device may detect or identify an error. In one or more examples, the first criterion comprises a first threshold. In one or more example electronic devices, a first threshold may be seen as a numerical or other limitation used to specify a limit (such as an upper limit or a lower limit).

In one or more example electronic devices, the determination of the recalibration parameter based on the three-dimensional coordinates comprises determining the distance between the three-dimensional coordinates and the corresponding two-dimensional coordinates for the same object. In one or more examples, the determination of the recalibration parameter based on the 3D coordinates comprises determining whether the distance meets the first criterion, and upon determining that the distance meets the first criterion, the control of the provision of the alert message based on the recalibration parameter comprises generating an alert message indicative of a severity level of the need for recalibration.

In one or more example electronic devices, an alert message may be seen as a one or more messages indicating an alert to one or more devices or systems, part of the monitoring system to another system. In one or more examples, the alert message may be a visual, auditory, or other alert message (such as a text-based message, an audio message, or other). For example, an alert message may be a notification, an email, a text message, a message to a system.

In one or more example electronic devices, a severity level may be seen as a degrees of severity indicative of a severity of the impact to the overall monitoring system, thus indicating a high (or low) need for the image sensor to be recalibrated in a timely manner. In one or more examples, a severity level may be indicative of a severity of the deviation or irregularity, such as a large difference between the image data (such as a large distance between the respective 2D and 3D coordinates). For example, the severity level can be based on a difference between the distance and the first threshold of the first criterion.

In one or more example electronic devices, a severity level may be modulated in a stepwise manner, based on a particular threshold, such as the first threshold, or in another way. In one or more examples, a plurality of severity levels may be available such as a first severity level, a second severity level, a third severity level and so on. In one or more examples, a plurality of severity levels may be available such as a low, medium, or high severity level. In one or more examples, the severity levels may be determined by a comparison of the distance (such as the distance at a particular time) with the first threshold and/or further thresholds. (such as previously determined thresholds).

In one or more example electronic devices, upon determining that the distance does not meet the first criterion, the control of the provision of the alert message based on the recalibration parameter comprises forgoing a generation of the alert message or generating an alert message indicative of no need for recalibration. In other words, the alert message is for example not generated when the distance does not meet the first criterion. For example, upon a determination that the distance between a point (such as the 3D constructed coordinates, for example (x,y,z) and the 2D coordinates (x,y), does not meet a first criterion (for example, the distance between the 3D coordinate and the obtained 2D coordinate for the same object is less than the threshold specified by the first criterion), the electronic device may forgo generating an alert message, such that no message is generated or communicated. In one or more examples, in a determination that the first criterion is not met, the electronic device may generate an alert message indicating that there is no need for a recalibration. For example, a message may be generated and sent that specifies that an evaluation has occurred of the current need for recalibration, and that for a particular image sensor, an absence of a need for recalibration was detected, in other words, the image sensors are properly calibrated.

In one or more example electronic devices, the plurality of two-dimensional coordinates and the plurality of three-dimensional coordinates associated with the set of respective objects are each associated with a time slot and/or a timestamp. In one or more example electronic devices, a time slot and/or timestamp may be seen as an indicator of a particular point in time and/or a particular time period, such as a particular frame. For example, a time slot and/or timestamp may include a date and time, including any of the following: day, month, year, hour, minute, second, millisecond, or other time increment.

In one or more example electronic devices, the determination of the recalibration parameter based on the three-dimensional coordinates comprises a determination of a plurality of recalibration parameters over time based on the three-dimensional coordinates associated with the time slot and/or the timestamp.

In one or more example electronic devices, a distance is monitored over time and the comparison to the first criterion is performed over time. For example, the electronic device may determine the recalibration parameter based on the 3D coordinates by determining the distance between the 3D coordinates and the corresponding 2D coordinates at a particular point in time (such as including a time stamp). The electronic device may then determine when the distance (such as the distance between the generated 3D coordinate and the obtained 2D coordinate) associated with the time stamp meets the first criterion. This determination may occur at a particular point in time and/or over time, such as periodically.

Upon determining that the distance at the time meets the first criterion, the electronic device may control for a provision of an alert message based on the recalibration parameter by generating an alert message.

In one or more example electronic devices, the electronic device may determine that the distance between the 3D and 2D coordinates for the respective object does not meet the first criterion at the particular time. In response the determination that the distance does not meet the first criterion, the electronic device may forgo an alert message or generate a message that indicates no recalibration is needed.

In one or more example electronic devices, the obtaining of the image data comprises associating the plurality of two-dimensional coordinates with the set of respective objects. In one or more examples, the electronic device may, as part of obtaining the image data, associate (such as assign, correlate, classify) each of a plurality of 2D coordinates with each of a plurality of objects in the image data.

In one or more example electronic devices, the determination of the recalibration parameter based on the three-dimensional coordinates comprises determining an association parameter indicative of whether the three-dimension coordinates are associated with an object having two-dimensional coordinates, which would be expected to be visible with a particular camera. In one or more examples, the 3D object is reprojected at a certain location. In one or more examples, it can be determined which camera or cameras should "see" the object, and through which camera or cameras an object should not be visible. In one or more examples, the electronic device may "check" if the 3D objects is associated with an object in the camera field of view (such as, via the 2D keypoints).In one or more examples, the determination of the recalibration parameter based on the three-dimensional coordinates comprises determining, based on the association parameter, the recalibration parameter. In one or more examples, a determination may be made that the 3D coordinates are not associated with an object identified in the camera view, such as from the 2D coordinates. In response to the determination that the 3D and 2D coordinates are not associated with an object as expected, the electronic device may obtain image data (for example, new or additional image data) until a determination was made that 3D coordinates are associated with any object for a particular camera or cameras. In one or more examples, the electronic device may return to other functions without obtaining further image data.

In one or more example electronic devices, an association parameter may be seen as a parameter indicating whether or not the 3D point p is associated with a 2D object in a particular field of view. In one or more examples, the association parameter may be represented by a function named ASSOC(t, p, k), where t is time, p is the 3D point, and k is the particular view.

In one or more example electronic devices, the association parameter may indicate that the 3D coordinates are not associated with the same object as the 2D coordinates. The output of the ASSOC function may be a Boolean.

In one or more example electronic devices, the distance between the three-dimensional coordinates and the corresponding two-dimensional coordinates for the same object comprises a reprojection error indicative of a distance between reprojected three-dimensional coordinates and obtained (such as detected) two-dimensional coordinates for the same object. In one or more example electronic devices, a reprojection error may be seen as the error (such as a distance or difference) between the 3D point reprojected in a particular view and the 2D detection of the same point in the particular view (such as a field of view). In one or more examples, the 2D point (or coordinates) for an object may be detected by the electronic device 400. In one or more examples, the reprojection error may be represented as REPROJ(t, p, k), where t is time, p is the particular point in the view (such as a 3D point). In other words, if p is associated with a 2D object O in view k, the reprojection error is the difference or distance between the 3D reprojection of p in view k and the 2D detection of point p in view k for the object O.

In one or more examples, the generated 3D coordinates (x,y,z) may be reprojected into the camera view (such as the field of view of the image sensor), in other words, calculate the 2D coordinates (such as (x,y)) using the camera calibration and project the 3D coordinates into that same view. Then, the reprojection (3D coordinates) and the detection (2D coordinates) may be compared and their distance measured.

In one or more example electronic devices, the generation of the plurality of three-dimensional coordinates based on the image data comprises applying an approximation technique to the three-dimensional coordinates. In one or more examples, an approximation technique may be seen as one or more methods used to solve a problem that may not give an exact solution but enables an approximate solution to be found. In one or more examples, the approximation technique used may be quantization. In one or more examples, the 3D coordinates are quantized into voxels. In one or more examples, the electronic device is configured to round the 3D coordinate data to three decimals; in one or more examples, the raw data (such as for the 3D coordinate data) may be generated to up to eight decimals. In one or more examples, approximation techniques may be used to conserve storage space and in pooling data for statistical purposes. In one or more examples, a keypoint may be detected at 1.5 and another one may be detected at 1.51. By applying an approximation technique, points 1.5 and 1.51 may each be seen as the same point (1.5), and thereby removing the need to collect and store data associated with the point for each point. Rather, the electronic device may consider both the same point and only require associated data for one point.

In one or more example electronic devices, the determination of the recalibration parameter based on the three-dimensional coordinates comprises determining, based on the three-dimensional coordinates of a first object at a first time, a first location of the first object associated with the first time. In one or more examples, the determination of the recalibration parameter based on the three-dimensional coordinates comprises obtaining, based on the three-dimensional coordinates of the first object at the first time, a second location associated with a second object and a second time. In one or more examples, the determination of the recalibration parameter based on the three-dimensional coordinates comprises comparing the first location associated with the first time with the second location associated with the second time. In one or more examples, the determination of the recalibration parameter based on the three-dimensional coordinates comprises determining whether the comparison meets a second criterion.

In one or more examples, a first location may be seen as a particular location of the first object in a space, such as within the field of view of the image sensor. In one or more examples, a detection or identification of a first object at a first location at a first time may be expressed as TRACKSTART, indicating the initiation of tracking of the first object.

In one or more examples, a second location may be seen as a particular location of the second object in a space, such as within the field of view of the image sensor. In one or more examples, a first time and a second time may be different times, but the first time occurs before or after the second time, and vice versa. For example, a first time could be 15:03 and a second time could be 15:05. In one or more examples, a first time could be 15:03 on July 10 and a second time could be 15:10 on July 3. In one or more examples, the first object and the second object may be the same objects or different objects. For example, the second object may be an object similar to the first object, such as an elbow of a person and an elbow of a different person. In one or more examples, the first location and the second location may be different locations in the monitored space.

In one or more examples, the electronic device 400 may detect a first location of a first object associated with a first time. For example, a point on a left elbow of a person entering through a doorway (such as on the right side of the field of view) may be detected at a particular timestamp, such as 14:44.02. In one or more examples, the electronic device may detect a second location of a second object associated with a second time. For example, a person's elbow (the point on the same person who entered the doorway at the first time) may be detected in the middle of the room (such as in the middle of the field of view) at a later timestamp, such as 14:44.48. In one or more examples, the recalibration parameter is determined by comparing the first location (such as the doorway location) at the first time with the second location (such as the middle of the room location) at the second time.

The electronic device may determine whether the comparison of the first location associated with the first time with the second location associated with the second time meets the second criterion. In one or more examples, a second criterion may include a threshold. For example, the comparison can lead to which a distance or difference, which meets the second criterion based on the threshold in order to trigger a need for recalibration, and therefore an alert for recalibration for a particular sensor, sensors, and/or sensor(s).

In one or more example electronic devices, the determination of the recalibration parameter based on the three-dimensional coordinates comprises upon determining that the comparison does not meet the second criterion, determining that the first object is no longer detected and/or providing the alert message for recalibration. Stated differently, for example, a location at a time TE1 when a given 3D object is last seen in the tracking system is registered and/or tracked (such as via TRACKEND), and the location at TE1 is compared to a historical location when an object (such as a similar object, or any object) is last seen according to historical data. For example, TRACKSTART provides a location at a time TS1 when the 3D object is first seen in the tracking system and the location at TS1 is compared to a historical location when an object (such as a similar object, or any object) is first seen according to historical data. In one or more examples, the determination of the recalibration parameter based on the three-dimensional coordinates comprises upon determining that the comparison meets the second criterion, continuing to determine one or more further locations of the first object, and continuing to compare to the second criterion. In one or more examples, the detection and/or determination that the first object is no longer detected may be represented as TRACKEND (t,p), where p is the final detection of an object track (before the system has lost track of it), and t is a timestamp.

In one or more example electronic devices, the second criterion is based on historical locations of objects, and/or expected locations within field of views of the image sensors. In one or more example electronic devices, historical locations may be seen as one or more points in the field of view wherein the object and/or an object similar and/or an object related for some other reason has in the past been detected. In one or more examples, expected locations may be seen as one or more points in the field of view wherein an object may be expected to pass, either at a particular time or a location irrespective of timing. In one or more examples, each of historical locations and expected locations may also, optionally, be tied to a particular time range or time period, for example, "historical locations at a particular time of day" or "expected locations on a particular day of the week" or "historical locations on weekend mornings" or any other relevant time demarcations that may help in prediction. In one or more example electronic devices, the expected locations is based on historical image data. In one or more examples, historical image data may be seen as data that has been previously collected by one or more image sensors. For example, historical sensor data may be obtained from the sensor obtaining the current (such as the image sensor obtaining the 2D points) image sensor and/or another sensor.

In one or more example electronic devices, the electronic device may collect statistics (such as historical locations of 3D coordinates and/or reprojections) of where tracking of each 3D object is initiated. In one or more examples, the electronic device may detect a new object (such as detect an object is initiated). In one or more examples, in response to the detection, the electronic device may compare the position to the historical statistics (such as compare the position to the second criterion). In one or more examples, this may be considered TRACKSTART. In one or more examples, the electronic device may detect that an object is lost (such as the object is no longer detected), and compare the last detected location with historical locations of 3D coordinates and/or reprojections (such as to a second criterion). In one or more examples, this may be considered TRACKEND.

In one or more examples, the electronic device is configured to generate a set of statistical models representative of the plurality of recalibration parameters over time. In one or more example electronic devices, a set of statistical models may be seen as a distribution of the recalibration parameters over time, such as histogram(s) and/ or more advanced statistical models such as kernel density estimation (KDE).

In one or more example electronic devices, the generation of a set of statistical models may occur over time, such as a time period, and/or periodically over time (for example, every 20 minutes).

In one or more examples, at time t, to determine if image sensor k is functioning properly, the electronic device 400 may use pre-defined time durations T_L and T_S, with T_L >> T_S. In one or more examples, the distribution of values between ASSOC(t-T_L .. t, *, k) and ASSOC(t-T_S .. t, *, k) are then compared. In one or more examples, the distribution of REPROJ(t-T_L .. t, *, k) and REPROJ(t-T_S .. t, *, k) are compared. In one or more examples, the values on a shorter time scale may be expected to reflect changes in system behavior in a responsive way. In one or more examples, the values on the longer time scale, however, may lead to a distribution that changes slowly to reflect normal operation state and is not easily swayed by abrupt changes. In one or more examples, if the distance) such as the distance between two distributions at 2 different time periods) becomes larger than a chosen threshold (in other words, a recalibration parameter meets a first criterion), then the electronic device identifies a need for recalibration and provides an alert message, as described herein.

In one or more examples, the greater the number of cameras in the monitoring system, the more easily the defective camera is to identify. that camera k has been disturbed and raises an alarm. This can be repeated for all camera views.

In one or more examples, the tracking (such as described at TRACKSTART and TRACKEND) may be used to identify a need for recalibration. In one or more examples, a well-functioning system is likely able to keep good track of the objects in the observation area (such as the field of view), so the tracks start and end at well-defined locations such as entrances and exits (for example, a doorway of a particular gallery in a museum). In one or more examples, a sign of a need for recalibration (or other error) within a monitoring system comprised of any number of image sensors is that the system, in this case an electronic device, begins to lose track of objects more often, for example, an error intermittent tracking (such as the detection of an object appearing and disappearing within a particular field of view, when it would be expected to stay in the field of view and if moving at all, move in a particular direction, such as a person walking, and/or such as a set of 3D coordinates appearing or disappearing associated with historical or expected 3D location data). In one or more examples, a sign of a need for recalibration (or other error) within a monitoring system is a detection of an object at an unexpected position, relative to the previous tracks of a similar object, (such as based on historical and/or expected position data), for example, a person walking through the room may be expected to enter the frame through a doorway and exit through a doorway, so a detection of a person appearing in the middle of a room (or some other unexpected entrance, exit, or movement) could be considered a sign of a need for recalibration. In one or more examples, a recalibration need may be detected where the detection either starts or ends in the middle of the room. In one or more examples, evaluating tracking statistics may be an effective way of detecting a need for recalibration. In one or more examples, image data may be further enriched by the inclusion of time data, for example, time-of-day or weekday information to reflect temporal patterns with potentially more accuracy.

In one or more example electronic devices, the alert message comprises one or more of: an indicator of severity, a time stamp, and an image sensor identification information. In one or more examples, the indicator of severity is associated with a severity level of a deviation to a system comprising the plurality of image sensors.

In one or more example electronic devices, image sensor identification information may be seen as one or more identifying pieces of information about an image sensor, such as a number (for example, "Camera 1" "Camera northeast"), a serial number, or other relevant identification information.

In one or more example electronic devices, the electronic device is configured to determine a statistical representation of the recalibration parameters based on the plurality of recalibration parameters.

In one or more examples, a statistical representation may be seen as one or more graphical representations of data. In one or more examples, the image data may be stored in a variety of space-effective ways. In one or more examples, rather than storing raw values for the 3D reprojection and reprojection error determinations data (which may be viewed as REPROJ data), the raw values may be quantized. In one or more examples, the pixel reprojections error distances (for example, a type of recalibration parameter) may be quantized or rounded into pre-defined bins, and rather than storing the raw data, only the histogram of the distribution may be stored while much of the raw data may be discarded, thus saving on crucial storage space.

In one or more examples, for statistics over a short time window (which may be represented as T_S), the histogram can be updated in conjunction with a circular buffer. In one or more examples, the time that each computation for the histogram or other statistical model for comparison (such as identifying the deviation), as well as the memory requirements for the storage and retrieval is constant, regardless of the number of image sensors for which the image data is being processed.

In one or more examples, for statistics over a long time window (which may be represented T_L), exponential decay may be applied to the histogram on each new sample. In one or more examples, when using T_L, the update time per sample as well as memory requirement may be proportional to the number of bins for the histogram. In one or more examples, the number of bins for the histogram is chosen beforehand and may be relatively small in number.

In one or more example electronic devices, the electronic device is configured to store the statistical representation in the memory. In one or more examples, all four data points (ASSOC, REPROJ, TRACKSTART, and TRACKEND) are collected over time. In one or more examples, only one of the following (ASSOC, REPROJ, TRACKSTART, and TRACKEND) is needed, for example in the form of: (ASSOC, or REPROJ or TRACKSTART and END).

The electronic device is configured to control (such as via the processor circuitry 402 and/or the interface 403), based on the recalibration parameter, provision of an alert message.

Processor circuitry 402 is optionally configured to perform any of the operations disclosed in Fig. 4 (such as any one or more of S102, S102A, S104, S104A, D106, S106A, S106B, S106C, S106D, S106E, S106F, S106G, S106H, S106H, S1061, S106J, S108, S110, S112, S112A, S112B, S114). The operations of the electronic device 400 may be embodied in the form of executable logic routines (for example, lines of code, software programs, etc.) that are stored on a non-transitory computer readable medium (for example, memory circuitry 401) and are executed by processor circuitry 402).

Furthermore, the operations of the electronic device 400 may be considered a method that the electronic device 400 is configured to carry out. Also, while the described functions and operations may be implemented in software, such functionality may also be carried out via dedicated hardware or firmware, or some combination of hardware, firmware and/or software. Memory circuitry 401 may be one or more of a buffer, a flash memory, a hard drive, a removable media, a volatile memory, a non-volatile memory, a random access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 also may be present (not shown in Fig. 3). Memory circuitry 401 is considered a non-transitory computer readable medium.

Memory circuitry 401 may be configured to store image data in a part of the memory.

In one or more examples, image sensors as depicted herein, and image sensor devices, as discussed may be communicatively coupled to the electronic device, may be connected via wired connection and/or may be a component of the electronic device.

Fig. 4 shows a flow diagram of an example method 100, performed by an electronic device according to the disclosure, for detecting a recalibration need for an image sensor. The device may be the electronic device 400 of Fig. 1 and Fig. 3. The method 100 comprises obtaining S102 image data from a plurality of image sensors. In one or more examples, the image data comprises a plurality of two-dimensional coordinates associated with a set of respective objects. In one or more examples, the at least two image sensors of the plurality of image sensors have an overlapping area of their fields of view.

In one or more example methods, the obtaining of the image data comprises associating S102A the plurality of two-dimensional coordinates with the set of respective objects.

In one or more example methods, the method comprises generating S104, based on the image data, three-dimensional coordinates associated with the set of respective objects.

In one or more example methods, the generation, of the plurality of three-dimensional coordinates based on the image data comprises applying S104A an approximation technique to the three-dimensional coordinates.

In one or more example methods, the method comprises determining S106, based on the three-dimensional coordinates, a recalibration parameter, wherein the recalibration parameter is indicative of a need for recalibration of at least one of the plurality of image sensors.

In one or more example methods, the recalibration parameter comprises a distance between the three-dimensional coordinates and the corresponding two-dimensional coordinates for the same object, and/or a comparison of the distance with a first criterion.

In one or more example. methods, the determination of the recalibration parameter based on the three-dimensional coordinates comprises determining S106A the distance between the three-dimensional coordinates and the corresponding two-dimensional coordinates for the same object.

In one or more example methods, the determination of the recalibration parameter based on the three-dimensional coordinates comprises determining S106B when the distance meets the first criterion.

In one or more example methods, the determination of the recalibration parameter based on the three-dimensional coordinates comprises determining 106C an association parameter indicative of whether the three-dimension coordinates are associated with the same object as the two-dimensional coordinates.

In one or more example methods, the determination of the recalibration parameter based on the three-dimensional coordinates comprises determining 106D, based on the association parameter, the recalibration parameter.

In one or more example methods, the determination of the recalibration parameter based on the three-dimensional coordinates comprises determining S106E, based on the three-dimensional coordinates of a first object at a first time, a first location of the first object associated with the first time.

In one or more example methods, the determination of the recalibration parameter based on the three-dimensional coordinates comprises obtaining S106F, based on the three-dimensional coordinates of the first object at the first time, a second location associated with a second object and a second time.

In one or more example methods, the determination of the recalibration parameter based on the three-dimensional coordinates comprises comparing S106G the first location associated with the first time with the second location associated with the second time.

In one or more example methods, the determination of the recalibration parameter based on the three-dimensional coordinates comprises determining S106H whether the comparison meets a second criterion.

In one or more example methods, the determination of the recalibration parameter based on the three-dimensional coordinates comprises, upon determining that the comparison does not meet the second criterion, determining S1061 that the first object is no longer detected and/or providing the alert message for recalibration.

In one or more example methods, the determination of the recalibration parameter based on the three-dimensional coordinates comprises, upon determining that the comparison meets the second criterion, continuing S106J to determine one or more further locations of the first object.

In one or more example methods, the method comprises determining S108 a statistical representation of the recalibration parameters based on the plurality of recalibration parameters.

In one or more example methods, the method comprises S110 storing the statistical representation in the memory.

In one or more example methods, the method comprises controlling S112, based on the recalibration parameter, provision of an alert message.

In one or more example methods, upon determining that the distance meets the first criterion, the control of the provision of the alert message based on the recalibration parameter comprises generating S112A an alert message indicative of a severity level of the need for recalibration.

In one or more example methods, upon determining that the distance does not meet the first criterion, the control of the provision of the alert message based on the recalibration parameter comprises forgoing S112B a generation of the alert message, or generating an alert message indicative of no need for recalibration.

In one or more example methods, the first criterion comprises a first threshold.

In one or more example methods, the plurality of two-dimensional coordinates and the plurality of three-dimensional coordinates associated with the set of respective objects are each associated with a time slot and/or a timestamp.

In one or more example methods, the determination of the recalibration parameter based on the three-dimensional coordinates comprises a determination of a plurality of recalibration parameters over time based on the three-dimensional coordinates associated with the time slot and/or the timestamp.

In one or more example methods, the method comprises generating S114 a set of statistical models representative of the plurality of recalibration parameters over time.

In one or more example methods, the distance between the three-dimensional coordinates and the corresponding two-dimensional coordinates for the same object comprises a reprojection error indicative of a distance between reprojected three-dimensional coordinates and obtained two-dimensional coordinates for the same object.

In one or more example methods, the second criterion is based on historical locations of objects, and/or expected locations within field of views of the image sensors.

In one or more example methods, the expected locations is based on historical image data.

In one or more example methods, the alert message comprises one or more of: an indicator of severity, a time stamp, and an image sensor identification information, wherein the indicator of severity is associated with a severity level of a deviation to a system comprising the plurality of image sensors.

Examples of methods and products (electronic device) according to the disclosure are set out in the following items:
Item 1. An electronic device comprising memory circuitry, an interface and processor circuitry, the electronic device being configured to:
   obtain image data from a plurality of image sensors, wherein the image data comprises a plurality of two-dimensional coordinates associated with a set of respective objects, wherein at least two image sensors of the plurality of image sensors having an overlapping area of their fields of view;
   generate, based on the image data, three-dimensional coordinates associated with the set of respective objects;
   determine, based on the three-dimensional coordinates, a recalibration parameter, wherein the recalibration parameter is indicative of a need for recalibration of at least one of the plurality of image sensors; and
   control, based on the recalibration parameter, provision of an alert message.
Item 2. The electronic device according to item 1, wherein the recalibration parameter comprises a distance between the three-dimensional coordinates and the corresponding two-dimensional coordinates for the same object, and/or a comparison of the distance with a first criterion.
Item 3. The electronic device according to item 2, wherein the determination of the recalibration parameter based on the three-dimensional coordinates comprises:
   - determining the distance between the three-dimensional coordinates and the corresponding two-dimensional coordinates for the same object;
   - determining when the distance meets the first criterion; and
   - upon determining that the distance meets the first criterion, the control of the provision of the alert message based on the recalibration parameter comprises generating an alert message indicative of a severity level of the need for recalibration.
Item 4. The electronic device according to item 3, wherein upon determining that the distance does not meet the first criterion, the control of the provision of the alert message based on the recalibration parameter comprises forgoing a generation of the alert message, or generating an alert message indicative of no need for recalibration.
Item 5. The electronic device according to any of items 3-4, wherein the first criterion comprises a first threshold.
Item 6. The electronic device according to any of the previous items, wherein the plurality of two-dimensional coordinates and the plurality of three-dimensional coordinates associated with the set of respective objects are each associated with a time slot and/or a timestamp.
Item 7. The electronic device according to item 6, wherein the determination of the recalibration parameter based on the three-dimensional coordinates comprises a determination of a plurality of recalibration parameters over time based on the three-dimensional coordinates associated with the time slot and/or the timestamp.
Item 8. The electronic device according to any of the previous items, wherein the obtaining of the image data comprises associating the plurality of two-dimensional coordinates with the set of respective objects.
Item 9. The electronic device according to any of the previous items, wherein the determination of the recalibration parameter based on the three-dimensional coordinates comprises:
   - determining an association parameter indicative of whether the three-dimension coordinates are associated with the same object as the two-dimensional coordinates; and
   - determining, based on the association parameter, the recalibration parameter.
Item 10. The electronic device according to item 2-9, wherein the distance between the three-dimensional coordinates and the corresponding two-dimensional coordinates for the same object comprises a reprojection error indicative of a distance between reprojected three-dimensional coordinates and obtained two-dimensional coordinates for the same object.
Item 11. The electronic device according to any of the previous items, wherein the generation, of the plurality of three-dimensional coordinates based on the image data comprises applying an approximation technique to the three-dimensional coordinates.
Item 12. The electronic device according to any of the previous items, wherein the determination of the recalibration parameter based on the three-dimensional coordinates comprises:
   - determining, based on the three-dimensional coordinates of a first object at a first time, a first location of the first object associated with the first time;
   - obtaining, based on the three-dimensional coordinates of the first object at the first time, a second location associated with a second object and a second time;
   - comparing the first location associated with the first time with the second location associated with the second time; and
   - determining whether the comparison meets a second criterion.
Item 13. The electronic device according to item 12 wherein the determination of the recalibration parameter based on the three-dimensional coordinates comprises:
   - upon determining that the comparison does not meet the second criterion, determining that the first object is no longer detected and/or providing the alert message for recalibration; and
   - upon determining that the comparison meets the second criterion, continuing to determine one or more further locations of the first object.
Item 14. The electronic device according to any of items 12-13, wherein the second criterion is based on historical locations of objects, and/or expected locations within field of views of the image sensors.
Item 15. The electronic device according to item 14, wherein the expected locations is based on historical image data.
Item 16. The electronic device according to any of the previous items, wherein the electronic device is configured to generate a set of statistical models representative of the plurality of recalibration parameters over time.
Item 17. The electronic device according to any of the previous items, wherein the alert message comprises one or more of: an indicator of severity, a time stamp, and an image sensor identification information, wherein the indicator of severity is associated with a severity level of a deviation to a system comprising the plurality of image sensors.
Item 18. The electronic device according to any of the previous items, wherein the electronic device is configured to:
   determine a statistical representation of the recalibration parameters based on the plurality of recalibration parameters; and
   store the statistical representation in the memory.
Item 19. A method for detecting a recalibration need for an image sensor, the method comprising:
   obtaining (S102) image data from a plurality of image sensors, wherein the image data comprises a plurality of two-dimensional coordinates associated with a set of respective objects, wherein at least two image sensors of the plurality of image sensors having an overlapping area of their fields of view;
   generating (S104), based on the image data, three-dimensional coordinates associated with the set of respective objects;
   determining (S106), based on the three-dimensional coordinates, a recalibration parameter, wherein the recalibration parameter is indicative of a need for recalibration of at least one of the plurality of image sensors; and
   controlling (S112), based on the recalibration parameter, provision of an alert message.
Item 20. The method according to item 19, wherein the recalibration parameter comprises a distance between the three-dimensional coordinates and the corresponding two-dimensional coordinates for the same object, and/or a comparison of the distance with a first criterion.
Item 21. The method according to item 20, wherein the determination of the recalibration parameter based on the three-dimensional coordinates comprises:
   - determining (S106A) the distance between the three-dimensional coordinates and the corresponding two-dimensional coordinates for the same object;
   - determining (S106B) when the distance meets the first criterion; and
   - upon determining that the distance meets the first criterion, the control of the provision of the alert message based on the recalibration parameter comprises generating (S112A) an alert message indicative of a severity level of the need for recalibration.
Item 22. The method according to item 21, wherein upon determining that the distance does not meet the first criterion, the control of the provision of the alert message based on the recalibration parameter comprises forgoing (S112B) a generation of the alert message, or generating an alert message indicative of no need for recalibration.
Item 23. The method according to items 21-22, wherein the first criterion comprises a first threshold.
Item 24. The method according to any of items 19-22, wherein the plurality of two-dimensional coordinates and the plurality of three-dimensional coordinates associated with the set of respective objects are each associated with a time slot and/or a timestamp.
Item 25. The method according to item 24, wherein the determination of the recalibration parameter based on the three-dimensional coordinates comprises a determination of a plurality of recalibration parameters over time based on the three-dimensional coordinates associated with the time slot and/or the timestamp.
Item 26. The method according to any of items 19-25, wherein the obtaining of the image data comprises associating (S102A) the plurality of two-dimensional coordinates with the set of respective objects.
Item 27. The method according to any of items 19-26, wherein the determination of the recalibration parameter based on the three-dimensional coordinates comprises:
   - determining (S106C) an association parameter indicative of whether the three-dimension coordinates are associated with the same object as the two-dimensional coordinates; and
   - determining (S106D), based on the association parameter, the recalibration parameter.
Item 28. The method according to any of items 19-27, wherein the distance between the three-dimensional coordinates and the corresponding two-dimensional coordinates for the same object comprises a reprojection error indicative of a distance between reprojected three-dimensional coordinates and obtained two-dimensional coordinates for the same object.
Item 29. The method according to any of items 19-28, wherein the generation, of the plurality of three-dimensional coordinates based on the image data comprises applying (S104A) an approximation technique to the three-dimensional coordinates.
Item 30. The method according to any of items 19-29, wherein the determination of the recalibration parameter based on the three-dimensional coordinates comprises:
   - determining (106E), based on the three-dimensional coordinates of a first object at a first time, a first location of the first object associated with the first time;
   - obtaining (106F), based on the three-dimensional coordinates of the first object at the first time, a second location associated with a second object and a second time;
   - comparing (106G) the first location associated with the first time with the second location associated with the second time; and
   - determining (106H) whether the comparison meets a second criterion.
Item 31. The method according to item 30, wherein the determination of the recalibration parameter based on the three-dimensional coordinates comprises:
   - upon determining that the comparison does not meet the second criterion, determining (1061) that the first object is no longer detected and/or providing the alert message for recalibration; and
   - upon determining that the comparison meets the second criterion, continuing (106J) to determine one or more further locations of the first object.
Item 32. The method according to item 30-31, wherein the second criterion is based on historical locations of objects, and/or expected locations within field of views of the image sensors.
Item 33. The method according to item 32, wherein the expected locations is based on historical image data.
Item 34. The method according to any of items 19-33, the method comprising generating (S114) a set of statistical models representative of the plurality of recalibration parameters over time.
Item 35. The method according to any of items 19-34, wherein the alert message comprises one or more of: an indicator of severity, a time stamp, and an image sensor identification information, wherein the indicator of severity is associated with a severity level of a deviation to a system comprising the plurality of image sensors.
Item 36. The method according to any of items 19-35, the method comprising
   determining (S108) a statistical representation of the recalibration parameters based on the plurality of recalibration parameters; and
   storing (S110) the statistical representation in the memory.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An electronic device comprising memory circuitry, an interface and processor circuitry, the electronic device being configured to:
obtain image data from a plurality of image sensors, wherein the image data comprises a plurality of two-dimensional coordinates associated with a set of respective objects, wherein at least two image sensors of the plurality of image sensors having an overlapping area of their fields of view;
generate, based on the image data, three-dimensional coordinates associated with the set of respective objects;
determine, based on the three-dimensional coordinates, a recalibration parameter, wherein the recalibration parameter is indicative of a need for recalibration of at least one of the plurality of image sensors; and
control, based on the recalibration parameter, provision of an alert message.

2. The electronic device according to claim 1, wherein the recalibration parameter comprises a distance between the three-dimensional coordinates and the corresponding two-dimensional coordinates for the same object, and/or a comparison of the distance with a first criterion.

3. The electronic device according to claim 2, wherein the determination of the recalibration parameter based on the three-dimensional coordinates comprises:
- determining the distance between the three-dimensional coordinates and the corresponding two-dimensional coordinates for the same object;
- determining when the distance meets the first criterion; and
- upon determining that the distance meets the first criterion, the control of the provision of the alert message based on the recalibration parameter comprises generating an alert message indicative of a severity level of the need for recalibration.

4. The electronic device according to claim 3, wherein upon determining that the distance does not meet the first criterion, the control of the provision of the alert message based on the recalibration parameter comprises forgoing a generation of the alert message, or generating an alert message indicative of no need for recalibration.

5. The electronic device according to any of claims 3-4, wherein the first criterion comprises a first threshold.

6. The electronic device according to any of the previous claims, wherein the plurality of two-dimensional coordinates and the plurality of three-dimensional coordinates associated with the set of respective objects are each associated with a time slot and/or a timestamp.

7. The electronic device according to claim 6, wherein the determination of the recalibration parameter based on the three-dimensional coordinates comprises a determination of a plurality of recalibration parameters over time based on the three-dimensional coordinates associated with the time slot and/or the timestamp.

8. The electronic device according to any of the previous claims, wherein the obtaining of the image data comprises associating the plurality of two-dimensional coordinates with the set of respective objects.

9. The electronic device according to any of the previous claims, wherein the determination of the recalibration parameter based on the three-dimensional coordinates comprises:
- determining an association parameter indicative of whether the three-dimension coordinates are associated with the same object as the two-dimensional coordinates; and
- determining, based on the association parameter, the recalibration parameter.

10. The electronic device according to any of claims 2-9, wherein the distance between the three-dimensional coordinates and the corresponding two-dimensional coordinates for the same object comprises a reprojection error indicative of a distance between reprojected three-dimensional coordinates and obtained two-dimensional coordinates for the same object.

11. The electronic device according to any of the previous claims, wherein the generation, of the plurality of three-dimensional coordinates based on the image data comprises applying an approximation technique to the three-dimensional coordinates.

12. The electronic device according to any of the previous claims, wherein the determination of the recalibration parameter based on the three-dimensional coordinates comprises:
- determining, based on the three-dimensional coordinates of a first object at a first time, a first location of the first object associated with the first time;
- obtaining, based on the three-dimensional coordinates of the first object at the first time, a second location associated with a second object and a second time;
- comparing the first location associated with the first time with the second location associated with the second time;
- determining whether the comparison meets a second criterion;
- upon determining that the comparison does not meet the second criterion, determining that the first object is no longer detected and/or providing the alert message for recalibration; and
- upon determining that the comparison meets the second criterion, continuing to determine one or more further locations of the first object.

13. The electronic device according to claim 12, wherein the second criterion is based on historical locations of objects, and/or expected locations within field of views of the image sensors.

14. The electronic device according to claim 13, wherein the expected locations is based on historical image data.

15. The electronic device according to any of the previous claims, wherein the electronic device is configured to generate a set of statistical models representative of the plurality of recalibration parameters over time.
